# EUROPEAN PATENT APPLICATION

(11) **EP 1 786 140 A1**
(43) Date of publication of application: **16.05.2007**
(21) Application number: 05024952.3
(22) Date of filing: 15.11.2005
(51) Int. Cl.: H04L 12/24, H04L 29/06, G06F 17/30

(54) **Server aided launching of applications, authenticating users and connecting secure networks**

(71) Applicant: SIEMENS AKTIENGESELLSCHAFT, 80333 München (DE)
(72) Inventor: Jungnickel, Gerd, Dr., 12487 Berlin (DE); RS, Aravindan, 560038 Bangalore (IN); Rueppel, Alfred, 83714 Miesbach (DE)

(57) **Abstract**

Launching an application is provided when the application is requested by a user connected to a user server, the application provided by a server being accessible by secure access. In response to the request, the server transmits a command that includes the parameters and instructions executable by the server and enabling the user server to connect to the server. In the command a password granting authorization to the user to launch the requested application is included. The user server executes the command that causes the connection of the user server to the server to be established and causes the password included with the command to be applied to the server. The server applied the password and, in response, launches the application.

## Description

The field of the invention relates to a launching mechanism for authenticating users and connecting secure Client Server Networks and, more particularly, to a server aided launching mechanism for authenticating users and connecting the networks . In a particular refinement of the invention, the invention relates to a server aided launching mechanism for authenticating users and connecting secure networks connected by a Graphical User Interface (GUI) Cut-Through. In a further refinement, the authentication may be in the form of Single Sign-On.

As the problem of managing next-generation networks composed of hybrid network elements become more and more prevalent, previously technology-specific interface solutions become insufficient. There is an industry demand for a full-featured, commercially available, scalable and non-proprietary network management solution, where multi-vendor, multi technology management systems interoperate in an open architecture environment.

The Telemanagement Forum (TMF) defines a standard for GUI cut-through (GCT) (part of TMF 814 standards) that aims at meeting this demand. TMF 814 is a widely used standard in the telecom industry. TMF814 provides the Solution Set for the Multi-Technology Network Management NML-EML Interface, and as such provides idl and supporting descriptions to enable interface implementation to take place. GUI Cut-Through, refers to the known process of launching Domain Manager Applications from either a CO~OP Integrator or a peer Domain Manager. The principle behind GCT is to Cut-Through the Graphical User Interfaces and connect two domains.

A problem of these and other environments is that they do not specify exactly how user authentication is to be performed when connecting between these domains. Of interest in particular is a user authentication using a Single Sign-on feature with GCT. This has particular relevance in the situation where a user desires to launch an application from the server, for example, such as relating to call services. In order to do so, something has to arrange for the authorization of the user and connection of the user to the server in such a way that complies with the security features of the server. Nothing so far has been adequate in providing access, for launching an application, that adequately deals with the security issues.

Some existing solutions utilize the TMF 814 interface and some have a proprietary solution to achieve GUI cut-through. In any event, these earlier solutions do not adequately take into account the security issues between the user and server domains. Perhaps, there are existing solutions implementing Single sign-on. But these do so in a proprietary way, which requires high integration efforts. As a result, to achieve single sign-on for the GCT launch using present technology, specific integration effort would be required which increases the Network Operator's integration costs. In any event, there exists no solution that provides user access to applications that takes into account the security issues and does so in an efficient and cost effective manner.

The proposed solution, in broad terms provides user access to the server, in particular for launching an application, that deals with and handles the security issues of the server, and in some cases the user side. The security issues may include the provision of Single Sign-on (SSO) feature for the end user. In terms of TMF, the aim of the current proposal is the launching of Vendor specific Element and Network Management applications from the OSS system via GUI Cut-through (GCT) and provides authentication therefor.

### Summary Of The Invention

An object of the invention is to provide launching of user applications.

Another object of the invention is to provide server aided launching of user applications.

Another object of the invention is to provide launching of applications between secure domains.

Another object of the invention is to provide user authentication for launching the applications.

Another object of the invention is to provide authentication using Single Sign-On.

Another object of the invention is to combine the TMF GUI Cut-through standard with industry approved security standards.

Another object of the invention, especially in regards to the Security Assertion Markup Language (SAML) standard, is to achieve a standard way for implementing Single Sign-On within GUI cut-through.

Another object of the invention is to define a server aided launch mechanism which aides in using SAML.

Another object of the invention is to apply the new server aided launch in non-Web clients using SAML.

In accordance with the above-mentioned objectives, the proposed solution provides a method in accordance with claim 1 for launching an application, the application requested by a user connected to a user server and the application provided by a server being accessible by secure access, the method steps characterized by,
requesting the application to be launched,
transmitting, in response to the request, by the server a command that includes the parameters and instructions executable by the server and enabling the user server to connect to the server,
including in the command a password granting authorization to the user to launch the requested application,
executing, by the user server, the command that causes the connection of the user server to the server to be established and causes the password included with the command to be applied to the server,
accepting by the server the password and, in response, launching the application.

It is further characterized in accordance with claim 2 by retrieving from the server a list of applications available to the user.

And further characterized in accordance with claim 3 wherein the server operates in accordance with graphical user interface (GUI) cut-through (GCT).

And further characterized in accordance with claim 4 by requesting the application to be launched includes a GCT get launch command.

And further characterized in accordance with claim 5 in that the step of transmitting transmits a GCT command including a GCT executable command line instructing the user server to connect to the server and applying the included password.

And further characterized in accordance with claim 6 by registering the password by the server.

And further characterized in accordance with claim 7 by authorizing the user based on the registration of the password by the server to access the server and launch additional applications.

A system providing for the launching the application requested by the user connected to the user server and the application provided by the server being accessible by secure access is characterized in terms of the above method according to claim 8.

In one example, the solution takes the form of an improvement over existing standards by combining the TMF GUI Cut-through (TMF 814 standard) with SAML, a security standard from the Organization for the Advancement of Structured Information Standards (OASIS) for handling Single Sign-on.

In a more detailed example, the solution defines a "Server aided launch" which helps integration of SAML based security in all clients and, in particular, for clients other than Web Based clients. Typically, SAML is more suited for Web Based clients.

The proposed solution is relevant to connection between any security domains, data exchange, nearly every service, client and service provider, multimedia streaming, etc. In terms of the problems set out above, the proposed solution is relevant to the integration of Multi-Vendor Element and Network Management systems (also commonly referred to as Domain Managers - DM - hereafter) within an Operation Support System (OSS) for management of Mobile Networks. In particular, the solution proposed may be relevant to Mobile Network operators.

The proposed solution is compatible with the TMF814 standard and in particular to TMF CO-OP standardizations and, therefore, may be integrated seamlessly therewith. Although, it must be bourne in mind that the present solution is not so limited to any particular standard, and may be applied in its broadest form as set out herein.

### Brief Description Of The Drawings

At least one example is given in the following description in regards to the following figures:
Figure 1 illustrates the logical flow control of the server aided launch of the proposed solution;
Figure 2 illustrates the invention as applied to a GCT environment;
Figure 3 illustrates an example source code for getting the profile of a domain manager; and
Figure 4 illustrates the security handling of Figure 2 in more detail.

### Detailed Description Of The Preferred Embodiments

The solution to the problem set out in the above is best understood by beginning with a discussion for the need to introduce a server aided launch according to the proposed solution. Of course, the need for launch applications in general is clear. User's of remote server's subscribe to access providers, such as mobile networks, to provide them with applications, such as call services.

In CO-OP GCT, for example, there exists launch types that are provided as an extension to the TMF 814 GUI Cut-through specification. TMF 814 GCT specification defines two types of launches. The first is a Client Launch. In this case, the Launching Entity (e.g. OSS) has complete information regarding the launch and it directly launches the application of the Serving DM (e.g. Vendor specific Element/Network Management system).

The second is known as a Server Launch. In this second case, the Launching Entity only has minimal information regarding the launch. Typically, this information includes only the functional context and the resource context. The Launching Entity passes this information to the Serving DM server which takes care of the launch.

There are salient differences between client and server launches. On the one hand, the Client Launch is a simpler mechanism supported by all platforms. In client launch, the Launching Entity client directly "pulls" the application user interface from the client of the serving DM. It is possible to implement this mechanism in all platforms (windows, UNIX ...).

In contrast, the server launch involves a circuitous connection via the DM server and the DM client. The DM client in this case has to "push" its application user interface to the client terminal where the user is sitting. The server launch is more limited as it works only for X Windows based system where the DISPLAY could be exported to another terminal which runs an X Window Client. Specific implementations would be necessary to implement a server launch on other platforms.

Given its limitations, one ponders why Server Launch is provided at all. One reason is that Server Launch provides better control. In the case of the client launch, all the parameters to launch applications (except the resource context) are to be pre-configured. In case of a server launch, on the other hand, all parameters of the launch can be dynamically determined. For example, a server could implement a load balancing by routing the launch request to different client terminal servers. In addition, the Server Launch mechanism may also make specific authorization checks and disallow some operations.

Not surprisingly, all this makes Security implementations more difficult with Server Launch. Server launch needs a service/daemon process running in the client of the launching entity which has to listen to requests from the client of serving DM. This service should also be secured to avoid unauthorized connection to the display of this machine.

Hence the need for a better solution to launch clients arises. Enter the Server aided Launch (SAL) of the proposed solution. The goal in designing the Server Aided Launch was to combine the simplicity of the client launch with the flexibility of server launch.

With the SAL of the proposed solution, the Launching Entity is directed to make a call to the Serving DM server to obtain (get) the actual start command. In other words, the user side server is told how to perform the launch. The serving DM is thus empowered, i.e., made able, to retrieve all dynamic information at this time. The actual launching itself has the advantage of appearing similar to a normal client launch.

The mechanism behind the proposed solution is that a client trying to call the terminal service is made to perform two independent steps. First, the client is caused to securely request relevant terminal service parameters including temporary logon credentials from the target server. This refers and takes account of the security issues between the two servers.

Secondly, the client is made to start the connection, in the refinement the GCT, as has been advised by the server. The server itself intercepts the terminal service execution by state-of-the-art schemes such as UNIX' pluggable authentication methodology (PAM) or Windows' Graphical Identification and Authentication (GINA) component and re-evaluates the temporary logon credentials that it previously passed to the client.

Advantageously, even a terminal service which is not aware of neither the client's nor the server's authentication services and possibly related external identity providers can be used for secured connection with the solution provided herein.

In a particular refinement of the above, the temporary credentials transmitted during the server aided launch may be of any kind the server prefers for its terminal service launch such as user IDs, passwords, X.509 Certificates, Kerberos tickets, SAML assertions, etc. It is advantageous that the client is not given the server side preference in advance.

During the first step, i.e., the authentication, the client ensures the server that the user context of the parameter retrieval request has already been successfully authenticated by a federation identity provider. In a particular refinement of the invention, which shall be described in more detail later, this is performed by transmitting an insurance statement formatted as a SAML assertion. The federation identity provider may be an external customer system or may be co-located at the client or server side. In either case, both client and server should be able to trust in the identity provider service once authentication according to the invention is established.

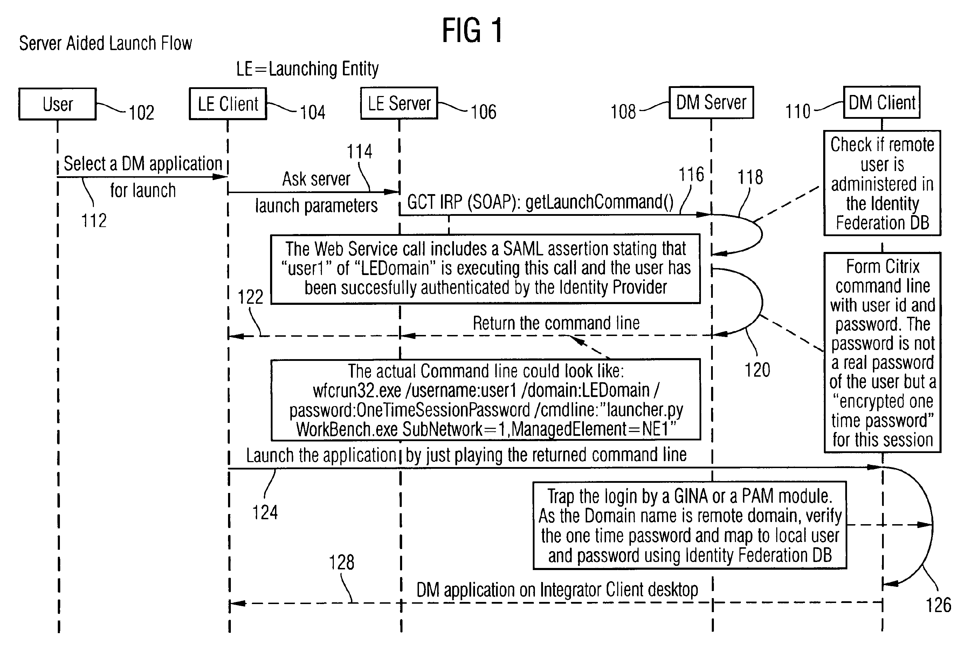

A concrete example of the proposed solution will now be provided with reference to Figure 1, which illustrates how the server aided launch mechanism may be applied. The example here demonstrates application to a Network Management System, such as that provided by Siemens, to provide GCT with SSO. However, it shall be appreciated that the invention is applicable to any network requiring access to user applications between secure domains.

Now with respect to Fig. 1, there is shown a User 102, LE (Launching Entity) client 104 and LE server 106 a DM (Domain Manager) server 108 and a DM client 110. In a step 112, the User 102 selects a DM application for launch from the LE Client 104. Next, in step 114, the LE client 104 requests the server launch parameters from the LE Server 106.

Then, the LE Server 106 sends a get launch command, for example, in the form of a web service call, in step 116 to the DM sever 108. The web service call may include, for example, a SAML assertion stating that "user 1" of "LEDomain" is executing this call and the user has been successfully authenticated by the identity provider. Such a get launch command may have the form "GCT IRP (SOAP):getLaunchCommand()" in the refinement including SAML.

In response, the DM Server 108 checks with the DM Client 110 if the remote user is administered in the identity Federation DB as indicated by step 118. In a next step (120), the DM Client forms a response, here for example a CITRIX command line, with the appropriate user id and password. In a refinement of the invention, the password is not a real password of the user but an "encrypted one time password" for this session.

The DM Server 108, in step 122, returns a command line to the LE Server 106 which is thereafter forwarded to the LE Client 104. The command line provides the LE client with the information "how to" connect to the server for accessing the requested application.

The actual Command line in the example may take the form
"wfcrun32.exe/username:user1/domain:LEDomain/password:OneTimeSessionPas sword/cmdline:"launcher.pyWorkbench.exe
SubNetwork=1,ManagedElement=NE1", as shown in the figure.

In response, the LE Client 104 in step 124 launches the application in accordance with the instructions/parameters sent in the command line. This is done, in a refinement of the invention, as shown in the figure by simply executing the returned command line.

In a step 126, the login is trapped, for example, by login of a GINA or a PAM module. As the domain name is a remote domain, verify the one time password and map to local user and password using identity Federation DB.

Step 128 indicates that the DM application, thus invoked, is provided to the LE Client. As shown in the figure, the application is provided on the Integrator Client desktop.

Now an example shall be given specifically in regard to the GCT domain. In principle, a trust is setup between the Domain Manager and the Identity Provider. After this point, the DM trusts SAML assertions from this Identity Provider. This could be done by simply registering the certificate of the Identity Provider at the DMs. It is possible that the Identity Provider is collocated within the Integrator.

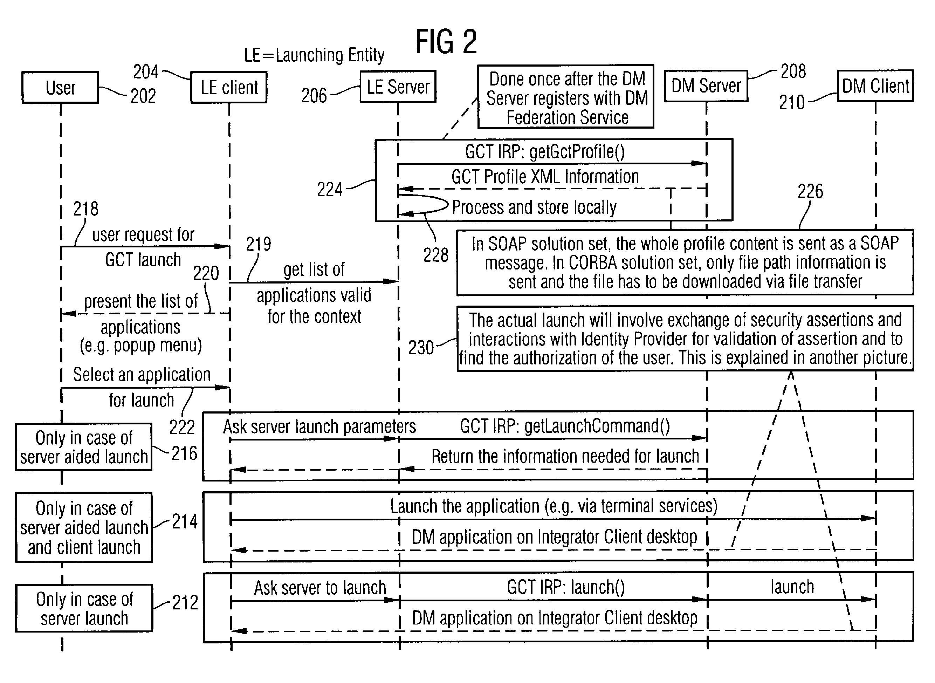

Figure 2 illustrates the over all sequence of interaction in the different types of launches, namely client, server and server aided launch as applied to the GCT environment. Similar to Figure 1, Figure 2 shows a User 202, LE (Launching Entity) client 204 and LE server 206 a DM (Domain Manager) server 208 and a DM client 210. The server launch is indicated generally by 212, the client launch is indicated by 214 and the server aided launch is indicated by 216.

As shown in the Figure, the user 202 requests the launch of an application as indicated by reference 218. The LE client 204 in response obtains (219) the list of application that are valid for that user 202 from the LE Server 206. The LE client 204 may, for example, provide a list of the applications as indicated by reference 220, which may be a pop up menu. Then the user 202 indicates a specific application to launch as indicated by reference 222.

In GCT, the launching entity in this manner will know the list of applications which could be launched on a given Serving DM. For each such application, it should know different properties like name, description, start commands, possible arguments and possible resource contexts in which the application could be launched. All this information is summarized in a GCT XML configuration profile per Serving DM.

Now, the retrieval of GCT XML Configuration Profile is shown in Figure 2 as the Launching Entity issuing GetGCTprofile signal to the DM Server 208. This should get the GCT XML configuration profile of a given Domain Manager as indicated by reference 224. The operation "getGctProfile" defined here is used in GCT for upload of GCT XML configuration profile from Domain Manager to the Launching Entity.

In particular terms of GCT, getGctProfile Launching Entity invokes this operation to know the profile information of the list of applications that can be invoked on the Domain Manager via the CO-OP GCT interface. It is expected that the Launching Entities invoke this operation the first time when needed and then cache this information as this data does not change often. For example, a CO-OP Integrator could invoke this operation when a Domain Manager registers with the CO-OP Domain Federation Service (DFS) and cache this information. It could keep using the cached data till there are some changes related to the Domain Manager in the CO-OP DFS. CO-OP DFS informs changes to all interested entities using a change notification.

The exact solution for getting the profile depends on the chosen solution set. In SOAP solution set, for example, the XML content is embedded in a SOAP envelope and delivered from the Domain Manager to a Launching Entity. In CORBA solution set, for example, only the information on the file path is delivered and protocol for transferring the file itself (e.g. FTP) is not in the purview of the standardization. As noted by reference 226. At any rate, the LE server 206 may process and store this information locally, as indicated by reference 228.

The getLaunchCommand (O) in the case of the server aided launch 216 is invoked by the Launching Entity to get the exact launch command line for an application whose launch type is 'Server Aided Launch'. It is the responsibility of the Domain Manager to return the exact launch command line for the given application name and the resource context.

The Launching Entity invokes the Operation launch(O) operation to launch an application whose launch type is 'Server Launch'. It is the responsibility of the Domain Manager to ensure that the respective application user interface is launched on the desktop of the client.

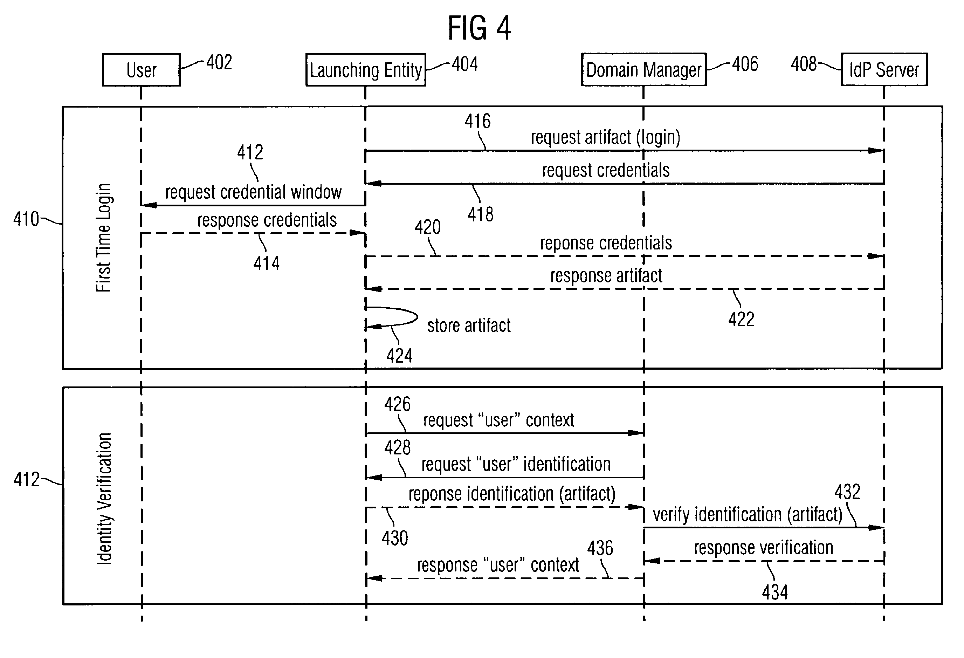

Thus, the actual launch is initiated. The resolution of the security issues, namely the authentication of the user and authorization rights to the applications, generally indicated by reference numeral 230, will be explained in more detail with reference to Figure 4.

Before turning to that discussion, it should be mentioned that each DM should support user profile administration and, in practice, performs identity Federation administration. This means a database table including user profile information and passwords should be populated and stored at the DM. An example of such a population may be given by the example Table I below

**Table I**

| **RemoteDomain** | **RemoteUser** | **LocalUser** | **LocalPassword (Optional)** |
|---|---|---|---|
| IntegratorDomain | User1 | User1 | <Encrypted Pwd> |
| IntegratorDomain | User2 | User3 | <Encrypted Pwd> |
| PeerDMDomain | User3 | User1 | <Encrypted Pwd> |

An example of the XML code used to retrieve the profile in the get profile command will now be given as an XML configuration profile format. It shall be noted that this is not the XML schema definition file. The schema will be defined when there is preliminary agreement of the description below. The XML element 'getProfile' is the overall container element which mainly consists of two parts.

The first part, Launch Information is summarized by the XML element 'launchInfoList'. This specifies all information necessary to launch applications - e.g. launch type, launch command and the address and platform on the host on which the launch is to be performed. Launch characteristic of one application is defined by the XML element 'launchInfo' while the XML element 'launchInfoList' is provided as a container to increase readability.

The second part, Resource Context Information is summarized by the XML element 'resourceContextList'. This specifies all information necessary for the Launching Entity to display available applications in a given context. One 'resourceContext' XML element could have multiple references to applications that could be launched in that context. The XML element 'resourceContextList' is provided as a container to increase readability.

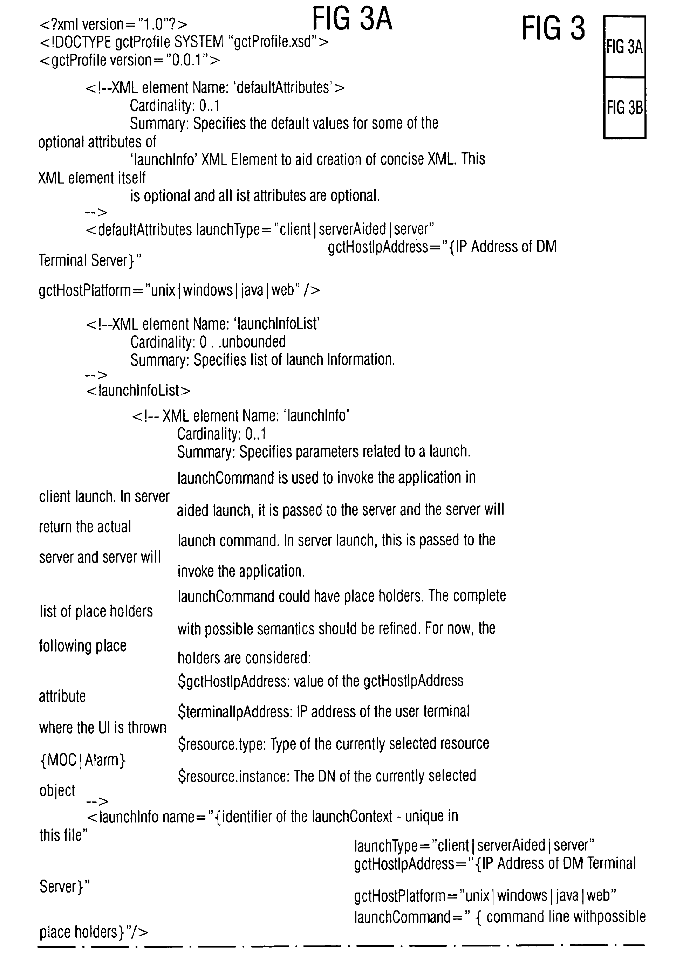

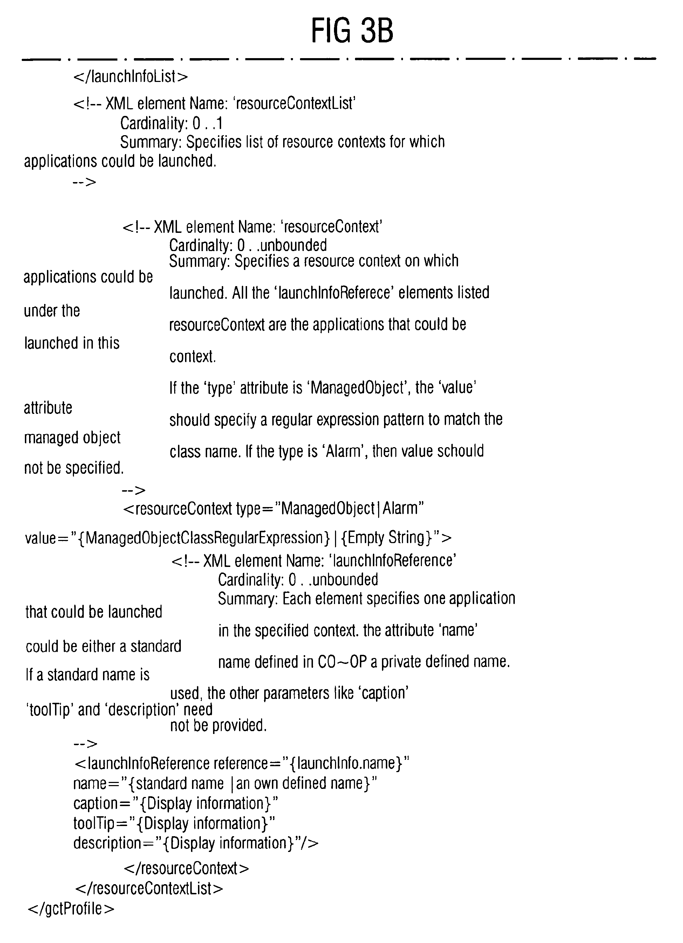

The salient instructions of the XML code in Figure 3 have already been discussed with reference to Figure 2. The details of the code will not be discussed as it is considered self-evident to the skilled person. Furthermore, Figure 3 illustrates an example of the XML code that may be used in the GCT setting. It shall be appreciated that this code is only an example and that modifications or variations of this code can certainly be made. In addition, the particular arrangement and selection of the logic flow of the code, as well as the choice of programming language, are not determinative to practicing the invention.

Now with respect to Figure 4, the security issues will be dealt with. Namely, authentication of the user and ensuring that the user has authorization to access the requested application will now be discussed. Here, there is shown a user 402, a launching entity (LE) 404, a domain manager (DM) 406 and an server 408, which may be an IdP server. As a refinement of the invention, the authentication comprises, in particular, a Single Sign-On procedure and this will be discussed with reference to Figure 4.

The procedure for SSO shown in Figure 4 is composed of two parts. The first part, "First Time Login" is indicated by reference 410, authenticates the LE user against the identity provider. During this procedure the operator ("user") must interact with the system, responding his "global/primary" credentials. This "First Time Login" might be part of a login procedure at the LE client completed by an identity verification responding the LE client "local/secondary" account parameters corresponding to the just authenticated "global" user.

In first time login, the LE 404 may provide a credential window to the user as indicated generally by 412 wherein the user (414) provides the appropriate credentials, i.e., username/password. Upon verification of the user's credentials, the LE 404 requests a logon (416) to the IdP server 408 and the Idp server 408 responds by requesting the credentials of the user (418). In response to this request, the LE 404 provides the appropriate credentials (420) and, providing that the credentials are valid, the IdP server 408 returns a response artefact (422). In our example, this would be the launch command line. And the artefact is stored at the LE 404 as indicated by reference 424.

In the next part, "identity Verification" indicated by reference 426 provides for each additional time a new user specific context (428) will be opened, in other words launching an application. In that case, the DM system should do two things. It is instructed in the initial instance to authenticate the requestor by obtaining the requestor's ID (430), verifying the LE created artifact against the IdP server context (432). Next, it should authorize the user as indicated by reference 434 and provide the user context (436). This means get the local account corresponding to the "global" user just authenticated from the IdP server. This should be done automatically without further user interaction.

In any event, this will conclude the authentication and authorization procedure of the proposed solution, thereby resolving the security issues mentioned above.

The Single Sign-On above is for the case where, during launch, it might be necessary to change the execution environment to run in a user specific context. Since the LE system and the DM systems are not expected to run under a common security control, every access to a specific user context at the DM system necessitates authentication (and authorization) of the requestor. However, there may alternatively arise a number of scenarios where the authentication procedure will be different that that above.

It shall be appreciated that the above-disclosed solution advantageously requires less integration efforts for the Network Operator.

In addition, this solution is compatible with the presently accepted standards. The inclusion of Single Sign-on for a GCT launch dovetails smoothly with the standard(s) in a single standard way. Notably, this also reduces the integration efforts for the network operator.

Furthermore, access control is fully retained within the target DM and is not shifted to any external system. This is an important aspect when integrating several independently developed DM systems as there is no requirement to align security information models of different DMs.

It shall be appreciated that, although the proposed solution presented here, may be described in particular terms of specific embodiments, the invention is not so limited and that variations or modifications thereof within the spirit and scope of the invention are deemed additionally within the realm of protection for which patent is sought.

## Claims

1. A method for launching an application, the application requested by a user (102) connected to a user server (106) and the application provided by a server (108) being accessible by secure access, the method steps **characterized by**,
requesting the application to be launched (112, 114, or 116),
transmitting, in response to the request, by the server a command (122) that includes the parameters and instructions executable by the server and enabling the user server to connect to the server,
including in the command a password granting authorization to the user to launch the requested application,
executing, by the user server, the command (124) that causes the connection of the user server to the server to be established and causes the password included with the command to be applied to the server,
accepting by the server the password and, in response, launching the application (128).

2. The method of claim 1, further **characterized by** retrieving from the server a list of applications available to the user.

3. The method of any of the preceding claims, further **characterized** wherein the server operates in accordance with graphical user interface (GUI) cut-through (GCT).

4. The method of preceding claim 3, further **characterized in that** the step of requesting the application to be launched includes a GCT get launch command.

5. The method of preceding claim 3, further **characterized in that** the step of transmitting transmits a GCT command including a GCT executable command line instructing the user server to connect to the server and applying the included password.

6. The method of any of the preceding claims, further **characterized by** the step of registering the password by the server.

7. The method of preceding claim 6, further **characterized in that** the step of authorizing the user based on the registration of the password by the server to access the server and launch additional applications.

8. A system providing for the launching the application requested by the user connected to the user server and the application provided by the server being accessible by secure access according to any of the preceding claims.

## Amended claims

### Amended claims in accordance with Rule 86(2) EPC.

**1.** A method for launching an application, the application requested by a user (102) of a mobile telecommunications station connected to a user server (106) and the application provided by a server (108) being accessible by secure access, the method steps **characterized by**,
the user server (106) requesting the server (108) that the application be launched (112, 114, or 116),
transmitting, in response to the request, by the server (10) an executable command (122) that is executable by the user server (106) including the parameters and instructions executable by the user server (106) that causes the user server (106) to connect to the server,
including in the executable command a password granting authorization to the server (108) to launch the requested application,
executing, by the user server (106), the executable command (124) that causes the connection of the user server to the server to be established and causes the password included with the command to be applied to the server (108),
accepting by the server (108) the password and, in response, launching the application (128).

**2.** The method of claim 1, further **characterized by** retrieving from the server (108) a list of applications available to the user.

**3.** The method of any of the preceding claims, further **characterized** wherein the server operates in accordance with graphical user interface (GUI) cut-through (GCT).

**4.** The method of preceding claim 3, further **characterized in that** the step of requesting the application to be launched includes a GCT get launch command.

**5.** The method of preceding claim 3, further **characterized in that** the step of transmitting transmits a GCT command including a GCT executable command line instructing the user server to connect to the server and applying the included password.

**6.** The method of any of the preceding claims, further **characterized by** the step of registering the password by the server (108).

**7.** The method of preceding claim 6, further **characterized in that** the step of authorizing the user based on the registration of the password by the server (108) to access the server (108) and launch additional applications.

**8.** A system providing for the launching the application requested by the user connected to the user server (106) and the application provided by the server (108) being accessible by secure access according to any of the preceding claims, the system **characterized by**,
the user server (106) requesting the server (108) that the application be launched (112, 114, or 116),
transmitting, in response to the request, by the server (10) an executable command (122) that is executable by the user server (106) including the parameters and instructions executable by the user server (106) that causes the user server (106) to connect to the server,
including in the executable command a password granting authorization to the server (108) to launch the requested application,
executing, by the user server (106), the executable command (124) that causes the connection of the user server to the server to be established and causes the password included with the command to be applied to the server (108),
accepting by the server (108) the password and, in response, launching the application (128).
